# FASCICULE DE BREVET EUROPEEN

(11) **EP 0 482 999 B1**
(45) Date de publication et mention de la délivrance du brevet: **28.12.1994**
(21) Numéro de dépôt: 91402823.8
(22) Date de dépôt: 23.10.1991
(51) Int. Cl.: B60J 10/04

(54) **Embout de pièce profilée telle qu'un joint lecheur pour vitre coulissante de véhicule automobile**
Ansatzstück für Profilteil zum Beispiel Dichtungsprofil für Fahrzeugschiebefenster
Tip of sectional piece such as a sealing strip for slidable vehicle window

(30) Priorité: 25.10.1990 FR 9013226
(43) Date de publication de la demande: 29.04.1992
(73) Titulaire: HUTCHINSON, F-75008 Paris (FR)
(72) Inventeur: Marche, Thierry, F-45200 Montargis (FR); Guillon, Henri, F-45700 Villemandeur (FR)
(74) Mandataire: Ramey, Daniel

(56) Documents cités:
- EP-A- 0 361 994
- FR-A- 2 096 689
- FR-A- 2 633 660
- US-A- 3 742 649

## Description

L'invention concerne un embout de pièce profilée telle par exemple qu'un joint lécheur pour vitre coulissante de véhicule automobile.

Les joints de ce type ont une section générale en U permettant leur montage par emboîtement sur des supports tels que des feuillures métalliques, qui sont prévus dans les portes de véhicule, le long des bords horizontaux inférieurs des baies de ces portes.

Dans certains cas, notamment lorsque les vitres sont du type affleurant, il est prévu actuellement de masquer les extrémités apparentes des joints lécheurs, au moyen par exemple d'embouts collés sur ces extrémités.

Il est en outre parfois nécessaire de fixer de façon positive et sensiblement indémontable ces pièces profilées ou ces joints sur leurs supports, ce qui peut être réalisé par vissage par exemple, mais qui impose toujours au moins une opération de reprise de la pièce profilée du joint.

L'invention a pour objet un embout de pièce profilée, telle qu'un joint lécheur par exemple, qui permette de masquer l'extrémité de la pièce profilée, qui ait un bon aspect de surface et qui permette de plus une fixation positive de la pièce profilée sur son support.

L'invention a encore pour objet un embout de ce type qui réalise une fixation indémontable de la pièce profilée sur son support.

Elle propose, à cet effet, un embout de pièce profilée telle par exemple qu'un joint lécheur pour vitre coulissante de véhicule automobile, cette pièce profilée ayant une section transversale générale en U pour son montage par emboîtement sur un support du type feuillure métallique, caractérisé en ce qu'il comprend une plaque d'aspect destinée à masquer une extrémité de la pièce profilée et du support de cette pièce, et une patte allongée qui s'étend depuis la face interne de la plaque d'aspect et qui est destinée à s'engager dans l'extrémité précitée de la pièce profilée entre une paroi longitudinale de celle-ci et ledit support, et qui comprend une butée d'encliquetage destinée à s'engager dans un orifice dudit support, pour fixer de façon positive l'embout et la pièce profilée sur le support et interdire leur démontage.

L'embout selon l'invention a donc pour fonctions essentielles de masquer l'extrémité de la pièce profilée de son support, et de fixer de façon positive la pièce profilée sur son support. Cette fixation est réalisée sans aucune reprise de la pièce profilée.

Selon un mode de réalisation de l'invention, au moins une partie de la patte allongée de cet embout est à section sensiblement en U pour former un canal de réception d'une lèvre interne de la pièce profilée.

Cette partie de l'embout exerce alors une fonction supplémentaire de réception et de guidage d'une lèvre interne de la pièce profilée.

Selon encore un autre mode de réalisation de l'invention, la patte longitudinale précitée de l'embout est maintenue entre un épaulement interne de la paroi longitudinale précitée de la pièce profilée et la base de la lèvre interne raccordée à cette paroi longitudinale.

Avantageusement, cet embout est moulé en une seule pièce, par exemple en matière thermoplastique, en matière thermodurcissable ou en élastomère, et comprend éventuellement un insert métallique de rigidification.

Il peut également être moulé en deux matières ayant des caractéristiques mécaniques différentes, notamment au niveau de la plaque d'aspect et de la patte longitudinale qui permet la fixation de la pièce profilée sur son support.

L'invention sera mieux comprise et d'autres caractéristiques, détails et avantages de celle-ci apparaîtront plus à la lecture de la description qui suit, faite à titre d'exemple en référence aux dessins annexés dans lesquels :
la figure 1 est une vue schématique en coupe transversale d'un embout selon l'invention, monté à l'extrémité d'un joint lécheur et assurant la fixation de ce joint sur un support;

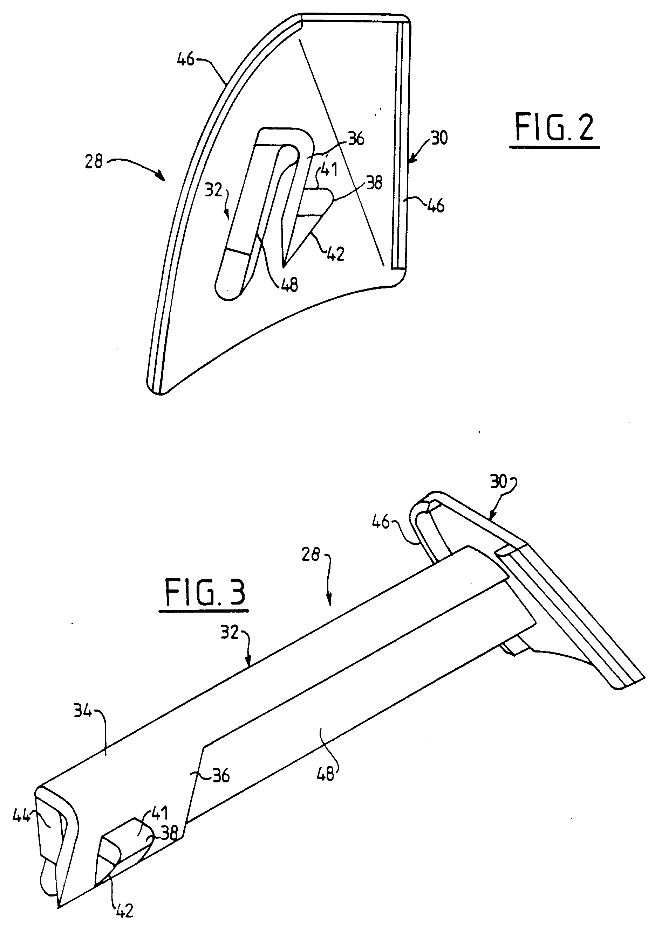

la figure 2 est une vue schématique de bout de l'embout selon l'invention;
la figure 3 est une vue schématique en perspective de cet embout.

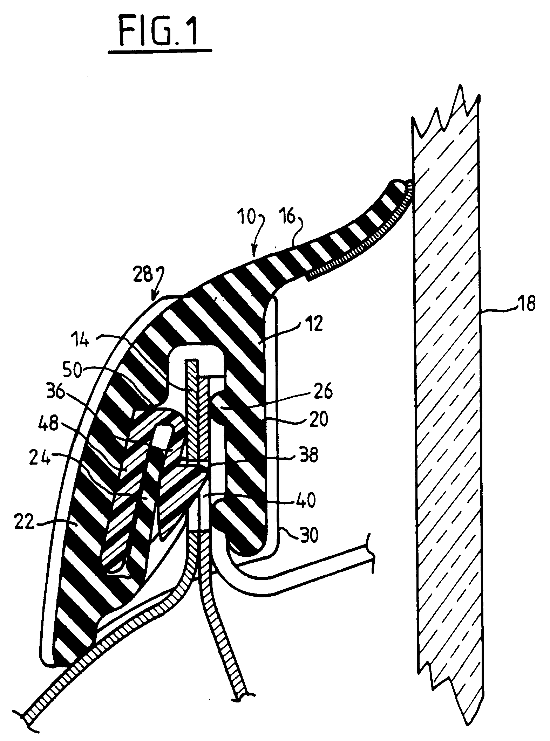

Dans l'exemple de réalisation représenté aux dessins, l'embout selon l'invention est associé à un joint lécheur équipant le bord horizontal inférieur d'une baie de porte de véhicule automobile. Ce joint lécheur est représenté en section transversale en figure 1 et est désigné par la référence 10. Il comprend un corps profilé 12 à section générale en U qui s'emboîte sur une feuillure métallique 14 faisant partie de la porte, et une lèvre élastiquement déformable 16 qui vient s'appliquer à son extrémité libre sur une vitre coulissante 18 (représentée ici dans sa position la plus éloignée du joint lécheur).

De façon classique, les deux parois longitudinales 20, 22 sensiblement parallèles du corps du joint comprennent des lèvres 24 et/ou des nervures 26 sur leur face interne, agencées pour s'opposer au retrait du joint et à son arrachement de sur la feuillure métallique 14. Dans l'exemple représenté, la paroi longitudinale 22 du corps du joint, qui est située vers l'extérieur, comprend une seule lèvre 24 raccordée à la partie inférieure de la paroi 22 et orientée vers le haut, tandis que la paroi opposée 20 du corps de joint comprend deux nervures arrondies 26 s'appliquant sur la feuillure 14.

Malgré la présence de la lèvre 24, un arrachement du joint 10 reste possible, ce qui permet éventuellement un accès depuis l'extérieur aux mécanismes logés à l'intérieur de la porte.

L'embout selon l'invention, qui est désigné généralement par la référence 28, comprend essentiellement une plaque d'aspect 30 et une patte longitudinale 32 destinée à s'engager dans une extrémité du joint 10 de façon telle que la plaque d'aspect 30 vienne masquer l'extrémité de ce joint, ainsi que l'extrémité correspondante de la feuillure 14 sur laquelle est montée le joint 10. Par ailleurs, la patte longitudinale 32 de l'embout selon l'invention est conçue pour, non seulement assurer le maintien de l'embout à l'intérieur du joint 10, mais également pour assurer la fixation de ce joint sur la feuillure métallique 14.

A cet effet, au moins l'extrémité libre 34 de la patte longitudinale 32, opposée à la plaque d'aspect 30, a une section longitudinale sensiblement en U orientée vers le bas, formant un canal dans lequel s'engage la lèvre interne 24 du joint 10 comme on le voit en figure 1. L'aile 36 de cette partie en U qui se trouve du côté de la feuillure métallique 14, porte une butée 38 qui vient s'engager par encliquetage dans une ouverture 40 de la feuillure métallique 14. Cette butée 38 est à face supérieure 41 droite, sensiblement perpendiculaire à l'aile 36 de l'extrémité 34 de la patte 32, et à face inférieure oblique 42.

L'extrémité libre de la partie 34 en U de la patte 32 peut comprendre des surfaces obliques 44 facilitant le guidage et l'introduction de la lèvre interne 24 du joint dans cette partie en U 34.

Le reste de la patte longitudinale 32, du côté de la plaque d'aspect 30, est à section transversale sensiblement en L, l'aile 36 n'étant prévue qu'au niveau de l'ouverture 40 dans cet exemple.

La plaque d'aspect 30 a une forme et une orientation qui sont adaptées, respectivement, à la forme du joint 10 en section transversale et à l'orientation de la partie de la porte sur laquelle elle viendra s'appliquer. Dans l'exemple représenté, la plaque d'aspect 30 comprend un rebord 46 sur sa face interne, le long de deux côtés opposés, qui délimitent le contour des deux parois longitudinales 20 et 22 du corps du joint 10. Ce rebord 46 est interrompu le long du bord supérieur de la plaque d'aspect 30, pour le passage de la lèvre d'étanchéité 16, et le long de son bord inférieur. Par ailleurs, cette plaque 30 n'est pas perpendiculaire à l'axe longitudinal de la patte 32, mais est inclinée en oblique sur cet axe.

L'embout selon l'invention est monté de la façon suivante :
on l'introduit dans l'extrémité du joint 10, avant le montage de celui-ci sur la feuillure 14, et de telle sorte que la lèvre interne 24 du joint 10 s'engage dans la partie 34 en U de la patte longitudinale 32 de l'embout. Dans cette position, la paroi longitudinale 48 de la patte 32 qui s'étend sur toute la longueur de cette patte et qui est parallèle à l'aile 36 portant la butée 38, est reçue et positionnée entre un épaulement interne 50 du joint 10 et la base de la lèvre interne 24 de ce joint. Si nécessaire, un point de colle permet de maintenir correctement la patte 32 à l'intérieur du joint 10.

Ensuite, cet ensemble est monté par emboîtement par le haut sur la feuillure métallique 14 et poussé jusqu'à ce que la butée 38 vienne s'engager dans l'ouverture 40 de la feuillure 14, cet engagement étant facilité par la face inférieure oblique 42 de la butée 38.

Dans cette position, la face supérieure droite 41 de la butée 38 vient s'appliquer sur le bord supérieur de l'ouverture 40 lorsqu'on essaye d'arracher le joint 10, et s'oppose donc au démontage de ce joint.

De façon générale, l'embout selon l'invention permet de masquer l'extrémité d'une pièce profilée montée par emboîtement sur un support et d'assurer de façon positive la fixation de cette pièce profilée sur son support.

## Revendications

1. Embout de pièce profilée telle par exemple qu'un joint lécheur pour vitre coulissante de véhicule automobile, cette pièce profilée (10) ayant une section transversale générale en U pour son montage par emboîtement sur un support (14) du type feuillure métallique par exemple, caractérisé en ce qu'il comprend une plaque d'aspect (30) destinée à masquer une extrémité de la pièce profilée (10) et du support (14) de cette pièce, et une patte allongée (32) qui s'étend depuis la face interne de la plaque d'aspect (30) et qui est destinée à s'engager dans l'extrémité précitée de la pièce profilée (10), entre une paroi longitudinale (22) de celle-ci et le support (14), et qui comprend une butée d'encliquetage (38) destinée à s'engager dans un orifice (40) dudit support, pour fixer de façon positive l'embout (28) et la pièce profilée (10) sur le support (14) et interdire leur démontage.

2. Embout selon la revendication 1, caractérisé en ce qu'au moins une partie (34) de la patte allongée (32) est à section sensiblement en U, pour former un canal de réception d'une lèvre interne (24) de la pièce profilée.

3. Embout selon la revendication 2, caractérisé en ce que ladite butée d'encliquetage (38) est formée en saillie sur la face externe d'une aile (36) de la partie en U, située du côté du support (14).

4. Embout selon la revendication 2 ou 3, caractérisé en ce que la partie (34) en U est formée à l'extrémité de la patte (32) opposée à la plaque d'aspect (30).

5. Embout selon l'une des revendications 2 à 4, caractérisé en ce que l'extrémité libre de la partie en U (34) de la patte longitudinale (32) comporte des surfaces obliques (44) de guidage de la lèvre interne (24) de la pièce profilée (10).

6. Embout selon l'une des revendications 2 à 5, caractérisé en ce que le reste de la patte longitudinale est à section en L.

7. Embout selon l'une des revendications 2 à 6, caractérisé en ce que ladite patte longitudinale (32) est maintenue entre un épaulement interne (50) de la paroi longitudinale (22) de la pièce profilée (10) et la base de la lèvre interne (24) raccordée à cette paroi longitudinale (22).

8. Embout selon l'une des revendications précédentes, caractérisé en ce qu'il est moulé en une seule pièce.

9. Embout selon l'une des revendications précédentes, caractérisé en ce qu'il est réalisé en matière thermoplastique, en matière thermodurcissable ou en élastomère et comprend éventuellement un insert métallique de rigidification.

10. Embout selon l'une des revendications précédentes, caractérisé en ce qu'il est réalisé en deux matières ayant des caractéristiques mécaniques différentes.

## Claims

1. An endpiece for a section member such as a wiping gasket for a sliding window of a motor vehicle, for example, said section member (10) having a generally U-shaped cross-section to enable it to be engaged on a support (14) of the metal rabbet type for example, the endpiece being characterized in that it comprises a trim plate (30) designed to mask one end of the section member (10) and of the support (14) for said member, and an elongate tab (32) which extends from the inside face of the trim plate (30) and which is designed to engage in the above-mentioned end of the section member (10) between a longitudinal wall (22) thereof and the support (14), and which includes a snap-fastening catch (38) designed to engage in an orifice (40) of said support, to fix the endpiece (28) and the section member (10) positively to the support (14) and prevent them from being disassembled.

2. An endpiece according to claim 1, characterized in that at least a portion (34) of the elongate tab (32) is of substantially U-shaped section, to form a channel for receiving an internal lip (24) of the section member.

3. An endpiece according to claim 2, characterized in that said snap-fastening catch (38) projects from the outside face of a flange (36) of the U-shaped portion, being situated on the same side thereof as the support (14).

4. An endpiece according to claim 2 or 3, characterized in that the U-shaped portion (34) is formed at the end of the tab (32) opposite from the trim plate (30).

5. An endpiece according to any one of claims 2 to 4, characterized in that the free end of the U-shaped portion (34) of the longitudinal tab (32) includes sloping surfaces (44) for guiding the internal lip (24) of the section member (10).

6. An endpiece according to any one of claims 2 to 5, characterized in that the remainder of the longitudinal tab is of L-shaped section.

7. An endpiece according to any one of claims 2 to 6, characterized in that said longitudinal tab (32) is held between an internal shoulder (50) of the longitudinal wall (22) of the section member (10) and the base of the internal lip (24) connected to said longitudinal wall (22).

8. An endpiece according to any preceding claim, characterized in that it is a one-piece molding.

9. An endpiece according to any preceding claim, characterized in that it is made of a thermoplastic material, a thermosetting material, or an elastomer, and optionally includes a stiffening metal insert.

10. An endpiece according to any preceding claim, characterized in that it is made of two materials having different mechanical characteristics.

## Patentansprüche

1. Ansatzstück für einen Profilteil, wie zum Beispiel eine Dichtungslippe für ein gleitend bewegbares Fenster eines Automobils, wobei dieser Profilteil (10) einen im allgemeinen U-förmigen Querschnitt besitzt, um durch Einsetzen in eine Halterung (14), beispielsweise ein Metallblech, befestigt zu werden, **dadurch gekennzeichnet, daß** es eine Sichtplatte (30), welche ein Ende des Profilteils (10) und der Halterung (14) dieses Teils abdeckt, und einen langgestrekten Lappen aufweist, welcher sich bis zu der Innenfläche der Sichtplatte (30) erstreckt und dazu geeignet ist, an dem Ende des Profilteils (10) zwischen einer Längswand (22) desselben und der Halterung (14) anzugreifen, und welcher einen Einhakteil (38) aufweist, welcher in eine Öffnung (40) der Halterung eingreift, um das Ansatzstück (28) und den Profilteil (10) an der Halterung (14) zu befestigen und ihre Demontage zu verhindern.

2. Ansatzstück nach Anspruch 1, **dadurch gekennzeichnet, daß** zumindest ein Teil (34) des langgestreckten Lappens (32) einen im wesentlichen U-förmigen Querschnitt besitzt, um einen Aufnahmekanal für eine innere Lippe (24) des Profilteils zu bilden.

3. Ansatzstück nach Anspruch 2, **dadurch gekennzeichnet, daß** der Einhakteil (38) vorspringend an einer Außenfläche eines Flügels (36) des U-förmigen Teils, welcher der Halterung (14) zugewandt ist, ausgebildet ist.

4. Ansatzstück nach Anspruch 2 oder 3, **dadurch gekennzeichnet, daß** der U-förmige Teil (34) an dem Ende des Lappens (32) ausgebildet ist, welches der Sichtplatte (30) gegenüber angeordnet ist.

5. Ansatzstück nach einem der Ansprüche 2 bis 4, **dadurch gekennzeichnet, daß** das freie Ende des U-förmigen Teils (34) des langgestreckten Lappens (32) geneigte Oberflächen (44) zur Führung der inneren Lippe (24) des Profilteils (10) aufweist.

6. Ansatzstück nach einem der Ansprüche 2 bis 5, **dadurch gekennzeichnet, daß** der übrige Teil des langgestreckten Lappens einen L-förmigen Querschnitt besitzt.

7. Ansatzstück nach einem der Ansprüche 2 bis 6, **dadurch gekennzeichnet, daß** der langgestreckte Lappen (32) zwischen einer inneren Ausnehmung (50) der Längswand (22) des Profilteils (10) und der Basis der inneren Lippe (24), die mit dieser Längswand (22) verbunden ist, gehalten wird.

8. Ansatzstück nach einem der vorigen Ansprüche, **dadurch gekennzeichnet, daß** es in einem Stück ausgeformt ist.

9. Ansatzstück nach einem der vorigen Ansprüche, **dadurch gekennzeichnet, daß** es aus einem thermoplastischen Material, einem warmverformbaren Material oder einem Elastomer realisiert ist und gegebenfalls eine Metalleinlage zur Versteifung aufweist.

10. Ansatzstück nach einem der vorigen Ansprüche, **dadurch gekennzeichnet, daß** es aus zwei Materialien mit unterschiedlichen mechanischen Eigenschalten ausgebildet ist.
